# EUROPÄISCHE PATENTSCHRIFT

(11) **EP 2 390 504 B1**
(45) Veröffentlichungstag und Bekanntmachung des Hinweises auf die Patenterteilung: **10.10.2018**
(21) Anmeldenummer: 10075233.6
(22) Anmeldetag: 31.05.2010
(51) Int. Cl.: F04B 39/12, F04B 39/14, F04B 53/00, F04B 53/16, F04B 53/22, F16J 10/02, F16J 13/12

(54) **Zylindergehäuse, insbesondere Pumpenzylindergehäuse**
Cylinder housing, in particular pump cylinder housing
Boîtier de cylindre, notamment boîtier de cylindre de pompe

(43) Veröffentlichungstag der Anmeldung: 30.11.2011
(73) Patentinhaber: Berlin Heart GmbH, 12247 Berlin (DE)
(72) Erfinder: Schwiertz, Norbert, 15344 Strausberg (DE)
(74) Vertreter: Pfenning, Meinig & Partner mbB

(56) Entgegenhaltungen:
- GB-A- 564 070
- GB-A- 739 996
- US-A- 1 971 727
- US-A- 5 073 096

## Beschreibung

Die Erfindung liegt auf dem Gebiet der Mechanik, speziell des Maschinenbaus, und befasst sich mit der Konstruktion von Zylindergehäusen.

Zylindergehäuse werden auf verschiedenen Einsatzgebieten wie in der Hydraulik, Pneumatik oder bei Verbrennungskraftmaschinen beispielsweise als Arbeitszylinder verwendet. Für viele derartige Anwendungen ist es notwendig, einen entsprechenden Zylinder, üblicherweise mit kreisrundem Querschnitt, mittels eines Deckelteils zu schließen. Ein entsprechendes Deckelteil kann einstückig mit dem Zylindergehäuse verbunden, jedoch auch auf dieses aufgesetzt und mit mechanischen Haltemitteln fixiert sein. Für viele Anwendungen wird zudem gefordert, dass das Deckelteil das Zylindergehäuse gasdicht oder flüssigkeitsdicht abschließt.

Aus der GB 739 996 A ist eine Stopfbuchse für die Welle einer Pumpe bekannt, welche einen Hohlzylinder umfasst in dem Stopfmaterial durch ein Deckelteil mit Hilfe einer Überwurfmutter unter axialen Druck gesetzt werden kann. Die Überwurfmutter wird auf eine Kronenhülse geschraubt. Das Deckelteil weißt hierbei Ausnehmungen auf, durch die hindurch Teile der Kronenhülse verlaufen.

Der vorliegenden Erfindung liegt in diesem Zusammenhang die Aufgabe zugrunde, ein Zylindergehäuse zu schaffen, das stirnseitig dicht abschließbar ist, wobei ein Hohlzylinder und das Deckelteil kolinear, zentriert und in beliebiger variabler Radialposition zueinander verbunden werden können und zu dem die Befestigung des Deckelteils einfach gestaltet werden soll, ohne dass die Zuverlässigkeit der Verbindung hierunter leidet.

Die Aufgabe wird mit den Merkmalen der Erfindung gemäß Patentanspruch 1 gelöst.

Die Erfindung sieht zur Lösung der Aufgabe ein stirnseitiges Deckelteil vor, das mithilfe einer Überwurfmutter fixierbar ist. Die Überwurfmutter ist auf eine Gewindehülse aufschraubbar, die außen auf den Hohlzylinder aufsetzbar ist. Die Gewindehülse ist an dem Hohlzylinder fixierbar und weist Ausnehmungen auf, durch die jeweils eine von wenigstens drei am Umfang des Deckelteils verteilten radialen Erhebungen in Radialrichtung wenigstens teilweise hindurchragt.

Das Deckelteil weist wenigstens drei axial verlaufende Fortsätze auf, die in Ausnehmungen der Gewindehülse verlaufen und radial nach außen gerichtete Erhebungen besitzen, die radial aus der Gewindehülse herausragen und an einer Stirnseite der Überwurfmutter anliegen. Damit kann durch Aufschrauben der Überwurfmutter axialer Zug in gleichmäßiger Art auf die Erhebungen und die Fortsätze ausgeübt werden, so dass das Deckelteil gegen die Stirnseite des Hohlzylinders kolinear gedrückt wird.

Die Fortsätze sind nach Art von Stehbolzen oder Warzen gestaltet, und es können drei oder mehr derartige Fortsätze vorteilhaft gleichmäßig am Umfang des Deckelteils verteilt sein.

Es kann weiter vorteilhaft vorgesehen sein, dass die Gewindehülse als Kronenhülse mit radialen, insbesondere rechteckigen Verjüngungen, vorteilhaft Längsnuten, ausgebildet ist, die sich vom deckelteilseitigen Ende ausgehend über einen Teil der Länge der Gewindehülse erstrecken.

Die Längsnuten können dabei als in radialer Richtung durchgehende oder nicht durchgehende Ausnehmungen gestaltet sein, in denen in Längsrichtung des Hohlzylinders die Fortsätze verschiebbar sind.

Das Gewinde ist umfangsseitig im Bereich der Längsnuten jeweils unterbrochen, jedoch sind die Längsnuten derart schmal gestaltet, dass die Überwurfmutter dennoch auf das Gewinde schraubbar ist.

Es kann auch vorgesehen sein, dass die Längsnuten sich radial durch die Wand der Gewindehülse hindurch erstrecken.

Zur Fixierung der Gewindehülse auf dem Hohlzylinder, vorzugsweise an dessen mantelseitiger Außenfläche, ist vorgesehen, dass die Gewindehülse durchgehend längsgeschlitzt ist. Sie ist damit radial aufweitbar und kann zum Aufbringen elastisch aufgeweitet werden, um nach dem Aufschnappen außen an dem Hohlzylinder einzurasten.

Da die Gewindehülse ausschließlich Zugkräfte in Richtung zum deckelseitigen Ende des Hohlzylinders aufzufangen hat, genügt es, wenn entsprechende Kräfte in einer Richtung aufgefangen werden, wofür beispielsweise das Einschnappen einer Rastnase hinter eine Hinterschneidung ausreicht.

Es kann vorgesehen sein, dass die Gewindehülse wenigstens eine radial nach innen ragende Erhebung aufweist, die in einer Ausnehmung oder Hinterschneidung an der Außenseite des Hohlzylinders zur Fixierung der Gewindehülse in Axialrichtung eingreift. Damit ist eine zuverlässige Fixierung der Gewindehülse in Längsrichtung relativ zum Hohlzylinder gegeben. Die Erhebung kann beispielsweise eine elastische Rastnase sein.

Es kann zudem vorgesehen sein, dass die Gewindehülse mehrere ringförmig an ihrer inneren Mantelfläche verteilte Erhebungen aufweist, die in entsprechende Ausnehmungen oder Hinterschneidungen an der Außenseite des Hohlzylinders eingreifen. Hierdurch kann eine gleichmäßige Befestigung ohne die Gefahr einer Verkippung der Gewindehülse gegenüber der Längsachse des Hohlzylinders sichergestellt werden.

Eine weitere mögliche Ausgestaltung der Erfindung sieht vor, dass der Hohlzylinder an seiner äußeren Mantelfläche wenigstens eine Erhebung aufweist, die mit einer Ausnehmung oder Hinterschneidung an der Innenseite der Gewindehülse zu deren axialer Fixierung zusammenwirkt. Auch in diesem Fall können mehrere Erhebungen und Ausnehmungen am Umfang gleichmäßig verteilt sein.

Zum besonders einfachen und gegebenenfalls dichten Zusammenfügen des Hohlzylinders mit dem Deckelteil kann auch vorgesehen sein, dass der Hohlzylinder an seiner Stirnseite einen Konus aufweist, der mit dem Deckelteil zusammenwirkt.

Der Konus kann beispielsweise der Zentrierung des Deckelteils gegenüber dem Hohlzylinder dienen, jedoch auch der Dichtung.

Ein derartiger Konus kann beispielsweise an der inneren Mantelfläche des Hohlzylinders als konisch zulaufende Fläche vorgesehen sein, jedoch auch als konisch zum deckelseitigen Ende zulaufende Fläche an der Außenseite des Hohlzylinders.

Um die Dichtung des Deckelteils am Hohlzylinder zu verbessern, sieht eine vorteilhafte Ausgestaltung der Erfindung vor, dass der Konus des Hohlzylinders mit dem Deckelteil unter Zwischenlage eines Dichtrings zusammenwirkt. Ein derartiger Dichtring kann vorteilhaft beispielsweise aus einem Elastomer, insbesondere Gummi, bestehen.

Die Erfindung kann sich zudem auf ein Zylindergehäuse beziehen, das einen Hohlzylinder und beidseitig an dessen Stirnseiten jeweils ein Deckelteil aufweist. Damit können beide Seiten des Hohlzylinders auf einfache Weise verschlossen und die Deckelteile beliebig radial zueinander positioniert werden.

Bei der Verwendung des Zylindergehäuses für eine Kolbenpumpe kann beispielsweise auch vorgesehen sein, dass ein Deckelteil eine Antriebsdurchführung für eine Antriebsstange eines Pumpkolbens aufweist. Das Deckelteil ist dann im radial äußeren Bereich ebenso gestaltet wie ein durchgehendes Deckelteil, weist jedoch im zentralen Bereich eine Schiebedurchführung auf, an der beispielsweise in gasdicht gedichteter Weise eine zylindrische Stange durchgeführt ist, die im Innenbereich des Hohlzylinders einen Kolben trägt.

Bei der Verwendung als Pumpkolben dichtet dieser Kolben an der inneren Mantelfläche des Hohlzylinders.

Beispielsweise kann das Gehäuse als Pumpengehäuse für eine Kolbenpumpe dienen, die periodisch ein Gas, beispielsweise Luft, komprimiert und expandiert, um diese Druckschwankungen über eine Druckleitung an eine Membranpumpe zu kommunizieren, die die Druckschwankungen in einem Arbeitsraum zum Ansaugen und Ausstoßen von Blut oder anderen Körperflüssigkeiten umsetzt. Die Erfindung bezieht sich auch auf ein derartiges Pumpensystem mit einer Kolbenpumpe.

Entsprechend ist die erfindungsgemäße Konstruktion des Zylindergehäuses einfach zu montieren, stabil und zuverlässig gasdicht sowie unter medizinischen Anwendungsbedingungen einsetzbar.

Im Folgenden wird die Erfindung anhand eines Ausführungsbeispiels in einer Zeichnung gezeigt und anschließend beschrieben.

Dabei zeigt
- Fig. 1: schematisch einen Längsschnitt eines Teils eines Zylindergehäuses,
- Fig. 2: eine Draufsicht auf ein Deckelteil,
- Fig. 3: eine dreidimensionale Ansicht einer Gewindehülse,
- Fig. 4: einen Längsschnitt eines Deckelteils,
- Fig. 5: eine Außenansicht eines Pumpenzylindergehäuses mit zwei montierten Deckelteilen,
- Fig. 6: eine weitere Ausführungsform des Zylindergehäuses in auseinandergezogener Darstellung,
- Fig. 7: die Ausführungsform aus Fig. 6 in drei-dimensionaler Darstellung sowie
- Fig. 8: die Ausführungsform aus den Figuren 6 und 7 in zusammengefügter Darstellung.

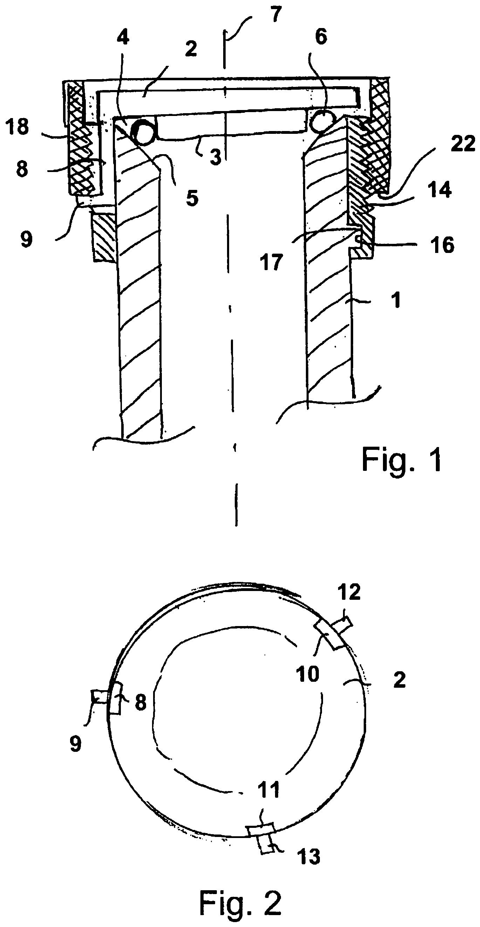

Fig. 1 zeigt einen Teil eines Pumpenzylindergehäuses mit einem Hohlzylinder 1 und einem Deckelteil 2, das stirnseitig auf den Hohlzylinder 1 aufgesetzt ist. Das Deckelteil 2 ist in einer Seitenansicht dargestellt, in der ein nach innen ragender zentrischer zylindrischer Ansatz 3 zu erkennen ist.

In einem Zwickel 4 zwischen dem Deckelteil 2, dem zylindrischen Ansatz 3 und einem Innenkonus 5 des Hohlzylinders 1 ist eine ringförmige Elastomerdichtung 6, beispielsweise aus Gummi oder einem Silikonelastomer bestehend, vorgesehen, die einerseits das Deckelteil 2 gegenüber dem Hohlzylinder zentriert und andererseits für einen gasdichten Abschluss des Zylindergehäuses sorgt.

Das Deckelteil 2 ist mit mehreren an seinem Umfang verteilten Fortsätzen verbunden, die in Richtung der Symmetrieachse 7 des Hohlzylinders verlaufen und von denen drei am Umfang des Deckelteils gleichmäßig verteilt sind. Von diesen ist einer, der Fortsatz 8, in der Fig. 1 dargestellt. Dieser weist an seinem dem Deckelteil 2 abgewandten Ende eine radial nach außen weisende Erhebung 9 auf.

Die Fig. 2 zeigt in einer Draufsicht das Deckelteil 2 mit den drei Fortsätzen 8, 10, 11 und mit entsprechenden Erhebungen 9, 12, 13, die jeweils radial nach außen weisen.

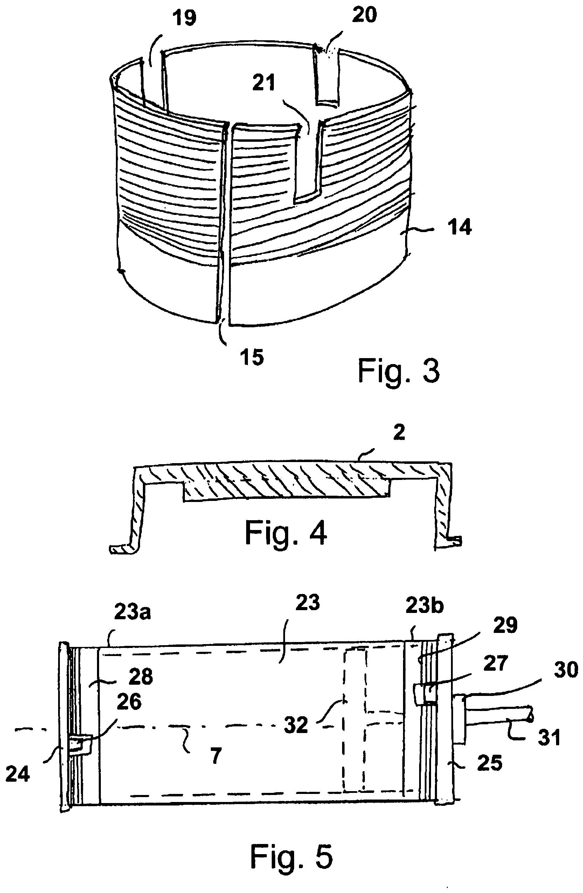

Das Deckelteil 2 ist mit dem Hohlzylinder mittels einer Gewindehülse 14 verbunden, die in Fig. 3 näher dargestellt ist. Die Gewindehülse 14 weist einen durchgehenden Längsschlitz 15 auf, wodurch sie radial elastisch aufweitbar ist. Die Hülse ist auf den Hohlzylinder 1 außen derart aufschnappbar, dass eine in Fig. 1 dargestellte Ausnehmung 16 an der inneren Mantelfläche der Hülse über eine entsprechende Erhebung 17 an der äußeren Mantelfläche des Hohlzylinders 1 aufschnappbar ist. Hierdurch wird die Gewindehülse in axialer Richtung an dem Hohlzylinder 1 fixiert. Es können vorteilhaft mehrere, insbesondere drei solcher formschlüssiger Verbindungen aus je einer Erhebung und einer Ausnehmung am Umfang des Hohlzylinders verteilt sein.

Auf die Gewindehülse 14 ist eine Überwurfmutter 18 aufschraubbar.

Beim Aufsetzen des Deckelteils 2 auf den Hohlzylinder 1 werden die Fortsätze 8, 10, 11 in entsprechende in Axialrichtung 7 des Hohlzylinders 1 verlaufende Ausnehmungen 19, 20, 21 der Gewindehülse eingeschoben, die somit als Kronenhülse ausgebildet ist. Die Ausnehmungen können radial durchgehend ausgebildet sein, das heißt die Hülse zur Gänze durchsetzen, oder auch nur als radial außen angeordnete nicht durchgehende Nuten ausgebildet sein.

Die Fortsätze 8, 10, 11 sind so bemessen, dass sie radial nicht aus den Konturen der Gewindehülse 14 herausragen, so dass die Überwurfmutter über sie hinweg aufgeschraubt werden kann.

Die Stirnseite 22 der Überwurfmutter 18 legt sich an die Erhebungen 9, 12, 13 an und presst diese in Axialrichtung 7 des Hohlzylinders derart, dass das an den Fortsätzen befestigte Deckelteil 2 gegen die Stirnseite des Hohlzylinders gepresst wird. Durch eine gleichmäßige Verteilung der Fortsätze 8, 10, 11 am Umfang des Deckelteils wird ein gleichmäßiger Druck auf das Deckelteil ausgeübt. Somit kann eine dauerhafte Dichtigkeit der Verbindung zwischen Deckelteil und Hohlzylinder gewährleistet werden, und es können zudem auf das Deckelteil wirkende Kräfte abgefangen werden.

Üblicherweise bestehen sowohl der Hohlzylinder als auch das Deckelteil, die Gewindehülse und die Überwurfmutter aus einem metallischen Werkstoff. Die einzelnen Teile können jedoch auch ganz oder teilweise aus einem Kunststoff bestehen.

Die Fig. 4 zeigt schematisch einen Längsschnitt durch ein Deckelteil, das beispielsweise über vier Fortsätze verfügt, die symmetrisch am Umfang verteilt sind.

In der Fig. 5 ist eine Außenansicht eines Pumpenzylindergehäuses 23 dargestellt, das an jedem seiner Enden 23a, 23b mit jeweils einem Deckelteil abgeschlossen ist. An den Enden des Hohlzylinders 23 ist jeweils einerseits eine Überwurfmutter 24, 25 dargestellt sowie andererseits jeweils die Erhebungen 26, 27 von nicht näher sichtbaren Fortsätzen der durch Überwurfmuttern 24, 25 verdeckten Deckelteile, die in die entsprechenden Nuten der Gewindehülsen 28, 29 hineinragen und durch die Überwurfmuttern 24, 25 gehalten werden.

Bei dem in der Fig. 5 rechts liegenden Deckelteil ist in der Mitte eine Antriebsdurchführung 30 vorgesehen, durch die gasdicht eine Antriebsstange 31 eines Pumpkolbens 32 geführt ist. Der Pumpkolben 32 ist im Inneren des Zylindergehäuses 23 gestrichelt dargestellt. Er liegt an der Innenoberfläche des Zylindergehäuses 23 dichtend an und ist oszillierend entlang der Symmetrieachse bewegbar. Entsprechende auf die Antriebsstange 31 wirkende nicht zentrale Kräfte, die beispielsweise durch die Anlenkung eines Kolbenantriebs auftreten können, werden durch die zuverlässige Verbindung zwischen dem entsprechenden Deckelteil und dem Zylindergehäuse 23 aufgefangen.

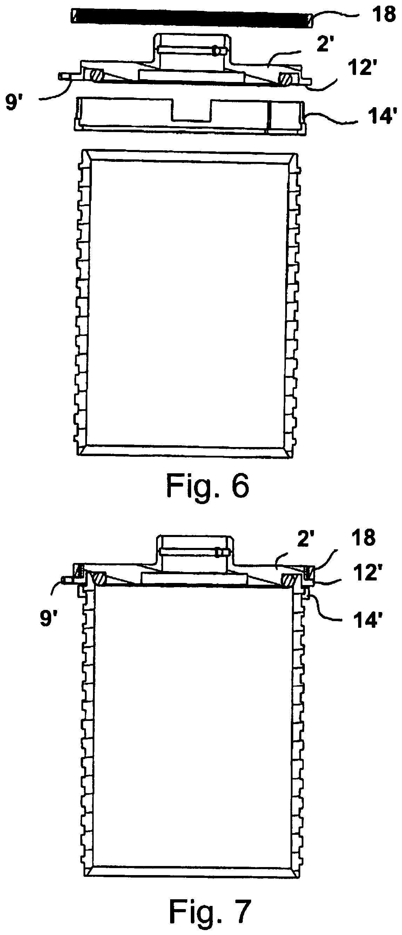

Die Fig. 6 zeigt eine Ausführungsform des Zylindergehäuses, bei der das Deckelteil 2' einen solchen Außendurchmesser aufweist, dass es in die Gewindehülse 14' hineinpasst. Das zylindrische Deckelteil 2' weist Erhebungen 9', 12' an seiner äußeren Mantelfläche auf, die radial nach außen weisen und sich durch axiale Längsnuten in der Gewindehülse hindurch über deren Außenkontur hinaus erstrecken. Die Erhebungen sind als Segmente eines umlaufenden Außenrings außen an dem Deckelteil ausgeführt, wobei der Außenring rechteckigen Querschnitt haben kann. Die Gewindehülse 14' und die Überwurfmutter 18 ragen im zusammengefügten Zustand, der in Fig. 7 dargestellt ist, über die Stirnseite des Hohlzylinders axial hinaus und umgeben das Deckelteil.

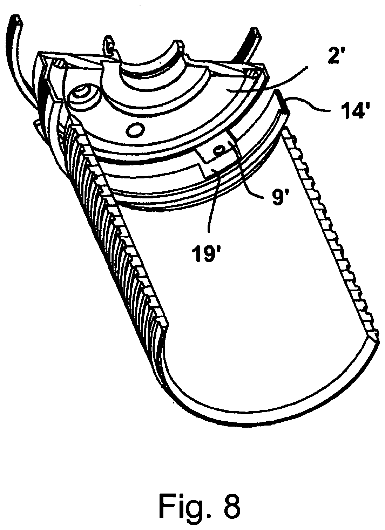

Die Fig. 8 zeigt die Konstellation aus Fig. 6 in dreidimensionaler Darstellung. Es ist insbesondere die axial verlaufende Nut 19' der Gewindehülse 14' zu erkennen, in die die Erhebung 9' des Deckelteils 2' eintaucht.

Das erfindungsgemäße Zylindergehäuse ist trotz einfacher Montage zuverlässig und dauerhaft gedichtet. Die entsprechenden Gewindehülsen können entweder, wie in der Fig. 1 dargestellt, selbst Aufnehmungen aufweisen, die auf entsprechende Erhebungen des Hohlzylinders aufschnappbar sind, oder es kann umgekehrt eine Gewindehülse radial nach innen ragende Erhebungen aufweisen, die in entsprechende Ausnehmungen des Hohlzylinders einrastbar sind. Vorteilhafterweise sind dabei mehrere solcher Ausnehmungen/Erhebungen am Umfang vorgesehen, um ein Verkanten der Gewindehülse zu verhindern. Sinnvoll kann es zudem sein, wenn die entsprechenden Ausnehmungen/Erhebungen nicht gänzlich am Umfang des Zylindergehäuses umlaufend sind und somit durch die formschlüssige Verbindung auch ein Drehen der Gewindehülse verhindert werden kann, so dass beim Aufdrehen der Überwurfmutter die Gewindehülse sich nicht mitdreht.

## Patentansprüche

1. Zylindergehäuse, insbesondere Pumpenzylindergehäuse, mit einem Hohlzylinder (1) und einem stirnseitigen Deckelteil (2, 2'), umfassend
- eine außen auf dem Hohlzylinder fixierbare Gewindehülse (14, 14'),
- wenigstens drei mit dem Deckelteil (2) verbundene, an deren Umfang verteilte, jeweils radial nach außen weisende Erhebungen (9, 12, 13), die wenigstens teilweise durch Ausnehmungen (19, 20, 21) der Gewindehülse hindurchragen, sowie
- eine auf die Gewindehülse aufschraubbare Überwurfmutter (18),
wobei an dem Deckelteil wenigstens drei Fortsätze (8, 10, 11) vorgesehen sind, die sich jeweils in Axialrichtung entlang dem Hohlzylinder erstrecken und wenigstens teilweise in Ausnehmungen (19, 20, 21) oder Nuten der Gewindehülse hineinragen, wobei an jedem Fortsatz wenigstens eine radial nach außen weisende Erhebung (9, 12, 13) vorgesehen ist,
**dadurch gekennzeichnet, dass** die Erhebungen (9, 9', 12, 12', 13) radial aus der Gewindehülse herausragen und an einer Stirnseite (22) der Überwurfmutter anliegen.

2. Zylindergehäuse nach Anspruch 1, **dadurch gekennzeichnet, dass** die Gewindehülse (14)) als Kronenhülse mit radialen, insbesondere rechteckigen Verjüngungen ausgebildet ist, die sich vom deckelteilseitigen Ende ausgehend über einen Teil der Länge der Gewindehülse (14) erstrecken.

3. Zylindergehäuse nach Anspruch 1 oder 2, **dadurch gekennzeichnet, dass** sich Längsnuten radial durch die Wand der Gewindehülse hindurch erstrecken.

4. Zylindergehäuse nach Anspruch 1 oder einem der folgenden, **dadurch gekennzeichnet, dass** die Gewindehülse (14) durchgehend längsgeschlitzt ist.

5. Zylindergehäuse nach Anspruch 1 oder einem der folgenden, **dadurch gekennzeichnet, dass** die Gewindehülse (14) wenigstens eine radial nach innen ragende Erhebung aufweist, die in einer Ausnehmung oder Hinterschneidung an der Außenseite des Hohlzylinders zur Fixierung der Gewindehülse in Axialrichtung eingreift.

6. Zylindergehäuse nach Anspruch 5, **dadurch gekennzeichnet, dass** die Gewindehülse mehrere ringförmig an ihrer inneren Mantelfläche verteilte Erhebungen aufweist, die in entsprechende Ausnehmungen oder Hinterschneidungen an der Außenseite des Hohlzylinders eingreifen.

7. Zylindergehäuse nach Anspruch 1 oder einem der folgenden, **dadurch gekennzeichnet, dass** der Hohlzylinder (1) an seiner äußeren Mantelfläche wenigstens eine Erhebung (17) aufweist, die mit einer Ausnehmung (16) oder Hinterschneidung an der Innenseite der Gewindehülse (14) zu deren axialer Fixierung zusammenwirkt.

8. Zylindergehäuse nach Anspruch 1 oder einem der folgenden, **dadurch gekennzeichnet, dass** der Hohlzylinder (1) an seiner Stirnseite einen Konus (5) aufweist, der mit dem Deckelteil (2) zusammenwirkt.

9. Zylindergehäuse nach Anspruch 8, **dadurch gekennzeichnet, dass** der Konus (5) des Hohlzylinders (8) mit dem Deckelteil (2) und der Zwischenlage eines Dichtrings (6) zusammenwirkt.

10. Zylindergehäuse nach Anspruch 9, **dadurch gekennzeichnet, dass** der Dichtring (6) aus einem Elastomer besteht.

11. Zylindergehäuse nach Anspruch 1 oder einem der folgenden, **dadurch gekennzeichnet, dass** auf jeder Stirnseite des Hohlzylinders (1, 23) je ein Deckelteil (2) vorgesehen ist.

12. Zylindergehäuse nach Anspruch 1 oder einem der folgenden, **dadurch gekennzeichnet, dass** ein Deckelteil eine Antriebsdurchführung (30) für eine Antriebsstange (31) eines Pumpkolbens (32) aufweist.

## Claims

1. A cylinder housing, in particular a pump cylinder housing, with a hollow cylinder (1) and with an end-side cover part (2, 2'), comprising
- a threaded sleeve (14, 14') which may be fixed on the outside on the hollow cylinder,
- at least three projections (9, 12, 13) which are connected to the cover part (2), are distributed on its periphery, in each case point radially outwards and at least partly project through recesses (19, 20, 21) of the threaded sleeve, as well as
- a union nut (18) which may be screwed onto the threaded sleeve,
wherein at least three continuations (8, 10, 11) are provided on the cover part which each extend in the axial direction along the hollow cylinder and at least partly project into recesses (19, 20, 21) or grooves of the threaded sleeve, wherein at least one radially outwardly pointing projection (9, 12, 13) is provided on each continuation,
**characterised in that** the projections (9, 9', 12, 12', 13) project radially out of the threaded sleeve and bear on an end side (22) of the union nut.

2. A cylinder housing according to claim 1, **characterised in that** the threaded sleeve (14) is designed as a crown sleeve with radial, in particular rectangular tapers which, proceeding from the end on the cover part side, extend over a part of the length of the threaded sleeve (14).

3. A cylinder housing according to claim 1 or 2, **characterised in that** longitudinal grooves extend radially through the wall of the threaded sleeve.

4. A cylinder housing according to claim 1 or one of the following ones, **characterised in that** the threaded sleeve (14) is longitudinally slotted in a continuous manner.

5. A cylinder housing according to claim 1 or one of the following ones, **characterised in that** the threaded sleeve (14) comprises at least one radially inwardly projecting projection which engages in a recess or undercut on the outer side of the hollow cylinder for fixing the threaded sleeve in the axial direction.

6. A cylinder housing according to claim 5, **characterised in that** the threaded sleeve comprises several projections which are distributed annularly on its inner peripheral surface and which engage into corresponding recesses or undercuts on the outer side of the hollow cylinder.

7. A cylinder housing according to claim 1 or one of the following ones, **characterised in that** the hollow cylinder (1) on its outer peripheral surface comprises at least one projection (17) which cooperates with a recess (16) or undercut on the inner side of the threaded sleeve (14) for its axial fixation.

8. A cylinder housing according to claim 1 or one of the following claims, **characterised in that** the hollow cylinder (1) at its end-side comprises a cone (5) which cooperates with the cover part (2).

9. A cylinder housing according to claim 8, **characterised in that** the cone (5) of the hollow cylinder (8) cooperates with the cover part (2) and the intermediate layer of a sealing ring (6).

10. A cylinder housing according to claim 9, **characterised in that** the sealing ring (6) consists of an elastomer.

11. A cylinder housing according to claim 1 or one of the following ones, **characterised in that** in each case a cover part (2) is provided on each end-side of the hollow cylinder (1, 23).

12. A cylinder housing according to claim 1 or one of the preceding ones, **characterised in that** a cover part comprises a drive lead-through (30) for a drive rod (31) of a pump piston (32).

## Revendications

1. Boîtier de cylindre, en particulier boîtier de cylindre de pompe, avec un cylindre creux (1) et avec une partie de couvercle (2, 2') côté frontal, comprenant
- une douille filetée (14, 14') pouvant être fixée à l'extérieur sur le cylindre creux,
- au moins trois saillies (9, 12, 13) raccordées à la partie de couvercle (2), réparties sur sa périphérie, dirigées respectivement vers l'extérieur, qui pénètrent au moins partiellement à travers des creux (19, 20, 21) de la douille filetée, ainsi que
- un écrou-raccord (18) pouvant être vissé sur la douille filetée,
au moins trois prolongements (8, 10, 11) étant prévus sur la partie de couvercle (2, 2'), qui s'étendent respectivement dans la direction axiale le long du cylindre creux et dépassent au moins partiellement dans des creux (19, 20, 21) ou des rainures de la douille filetée, au moins une saillie (9, 12, 13) dirigée radialement vers l'extérieur étant prévue sur chaque prolongement,
**caractérisé en ce que** les saillies (9, 9', 12, 12', 13) dépassent radialement de la douille filetée et sont adjacentes à un côté frontal (22) de l'écrou-raccord.

2. Boîtier de cylindre selon la revendication 1, **caractérisé en ce que** la douille filetée (14) est constituée en tant que douille à couronne avec des rétrécissements radiaux, en particulier rectangulaires, qui s'étendent à partir de l'extrémité côté partie de couvercle sur une partie de la longueur de la douille filetée (14).

3. Boîtier de cylindre selon la revendication 1 ou 2, **caractérisé en ce que** des rainures longitudinales s'étendent radialement à travers la paroi de la douille filetée.

4. Boîtier de cylindre selon la revendication 1 ou selon l'une des suivantes, **caractérisé en ce que** la douille filetée (14) est fendue longitudinalement de façon continue.

5. Boîtier de cylindre selon la revendication 1 ou selon l'une des suivantes, **caractérisé en ce que** la douille filetée (14) présente au moins une saillie dépassant radialement vers l'intérieur qui engrène dans un creux ou une contre-dépouille sur le côté extérieur du cylindre creux pour la fixation de la douille filetée dans la direction axiale.

6. Boîtier de cylindre selon la revendication 5, **caractérisé en ce que** la douille filetée présente plusieurs saillies réparties de façon annulaire sur sa surface d'enveloppe intérieure qui engrènent dans des creux ou contre-dépouilles correspondants sur le côté extérieur du cylindre creux.

7. Boîtier de cylindre selon la revendication 1 ou selon l'une des suivantes, **caractérisé en ce que** le cylindre creux (1) présente sur sa surface d'enveloppe extérieure au moins une saillie (17) qui coopère avec un creux (16) ou une contre-dépouille sur le côté intérieur de la douille filetée (14) pour sa fixation axiale.

8. Boîtier de cylindre selon la revendication 1 ou selon l'une des suivantes, **caractérisé en ce que** le cylindre creux (1) présente sur son côté frontal un cône (5) qui coopère avec la partie de couvercle (2).

9. Boîtier de cylindre selon la revendication 8, **caractérisé en ce que** le cône (5) du cylindre creux (8) coopère avec la partie de couvercle (2) et la couche intermédiaire d'une bague d'étanchéité (6).

10. Boîtier de cylindre selon la revendication 9, **caractérisé en ce que** la bague d'étanchéité (6) est composée d'un élastomère.

11. Boîtier de cylindre selon la revendication 1 ou selon l'une des suivantes, **caractérisé en ce que** respectivement une partie de couvercle (2) est prévue sur chaque côté frontal du cylindre creux (1, 23).

12. Boîtier de cylindre selon la revendication 1 ou selon l'une des suivantes, **caractérisé en ce qu'**une partie de couvercle présente une traversée d'entraînement (30) pour une tige d'entraînement (31) d'un piston de pompe (32).
